# EUROPEAN PATENT APPLICATION

(11) **EP 0 615 230 A2**
(43) Date of publication of application: **14.09.1994**
(21) Application number: 94200573.7
(22) Date of filing: 07.03.1994
(51) Int. Cl.: G11B 5/48, G11B 5/55

(54) **Magnetic-tape apparatus and magnetic-head unit for use in the magnetic-tape apparatus**

(30) Priority: 12.03.1993 EP 93200728
(71) Applicant: Philips Electronics N.V., 5621 BA Eindhoven (NL)
(72) Inventor: Vollmann, Norbert Christian, NL-5656 AA Eindhoven (NL)
(74) Representative: Schrijnemaekers, Hubert Joannes Maria

(57) **Abstract**

A magnetic head which is rotatable through 180° between two extreme positions, is connected to a component (23) in the magnetic-tape apparatus (1) *via* a foil (21) provided with electrical conductor tracks. The foil (21) is wrapped partly around a spindle (35) and has a first end (47) connected to the magnetic head (19). A part of the foil (21) forms a loop (51) situated in a recess (53) formed in the spindle (35). The recess (53) extends over a part of the circumference (55) of the spindle (35) and in a tangential direction it is bounded by two walls (59,61) having such arcuate shapes viewed in a radial direction of the spindle that the loop (51) lies against one of the arcuate walls (59,61) in the extreme positions of the magnetic head.

## Description

The invention relates to a magnetic-tape apparatus including a magnetic-head unit comprising a magnetic head rotatable between two positions, and a elongate foil wrapped partly around a spindle and provided with electrical conductor trace for the signal transmission between the magnetic head and a component of the magnetic-tape apparatus, which foil has a first end connected to the magnetic head and a second end to the component.

A magnetic-tape apparatus of the type defined in the opening paragraph is commercially available as a Digital Compact Cassette (DCC) magnetic-tape apparatus. The known magnetic-tape apparatus has a magnetic head provided with transducing gaps for reading and writing information from/on a magnetic tape. Each of these transducing gaps is situated in a magnetic circuit with a transducing element. In operation the transducing elements are driven individually. In order to avoid a tangle of connection wires required for this purpose the connection wires take the form of electrical conductor tracks arranged on a foil. In the known magnetic-tape apparatuses magnetic tape transport is possible in two opposite directions. In auto-reverse magnetic-tape apparatuses the magnetic head may be rotatable through 180° between two extreme positions. In order to allow a rotation through a angle of 180° the foil is coiled into a number of turns, the foil being wound up or unwound during rotation of the magnetic head. A disadvantage of the gown magnetic-tape apparatus is that in one of the extreme positions of the magnetic head, in which the foil has been unwound partly, the remaining coil of foil has a comparatively large diameter and consequently requires a substantial mounting space.

It is object of the invention to provide a magnetic-tape apparatus of the type defined in the opening paragraph, whose magnetic-head unit requires less mounting space. To this end the magnetic-tape apparatus in accordance with the invention is characterized in that a part of the foil between the two ends forms a loop situated at least for the greater part in a recess formed in the spindle, which recess extends over a part of the circumference of the spindle. Since the foil is not coiled but formed into a loop which extends in a recess in the spindle and is slackened in this recess when the magnetic head is rotated the foil occupies hardly any more space than the spindle itself, so that only a limited mounting space is needed.

DE 35 37 783 A1 (herewith incorporated by reference) discloses a device for signal transmission in which a foil wound partly onto a spindle and another part of the foil forms a loop. However, in said device the loop is situated outside the spindle, so that additional mounting space is required.

An embodiment of the magnetic-tape apparatus in accordance with the invention is characterized in that in the tangential direction the recess is bounded by two walls having such arcuate shapes viewed in a radial direction of the spindle that the loop lies against one of the arcuate walls in the extreme positions of the magnetic head. In this embodiment the loop is supported in the extreme positions of the magnetic head and is constrained to assume a such a shape that the foil remains substantially within the circumference of the spindle.

An embodiment of the magnetic-tape apparatus in accordance with the invention is characterized in that the first end of the foil engages a slot formed in the spindle and extending through the central axis of the spindle. The first end by which the foil is fastened to the magnetic head is thus held in position and enclosed, so that the fastening is hardly loaded during rotation of the magnetic head.

The invention also relates to a magnetic-head unit for use in the magnetic-tape apparatus in accordance with the invention and provided with a recess extending over a part of the circumference of the spindle to accommodate a foil with conductor tracks.

An embodiment of the magnetic-head unit in accordance with the invention is characterized in that a part of the foil forms a loop situated in the recess formed in the spindle.

These and other aspects of the invention will be apparent from and elucidated by means of the embodiments described hereinafter.

The invention will now be described in more detail, by way of example, with reference to the drawings. In the drawings:
Figure 1 shows a magnetic-tape apparatus in accordance with the invention,
Figure 2 is a diagrammatic front view of a magnetic-head unit in accordance with the invention,
Figure 3 is a diagrammatic plan view of the magnetic-head unit,
Figure 4 is a diagrammatic sectional view of the magnetic-head unit, the magnetic head being shown in a first extreme position, and
Figure 5 is a diagrammatic sectional view of the magnetic-head unit, the magnetic head being shown in a second extreme position.

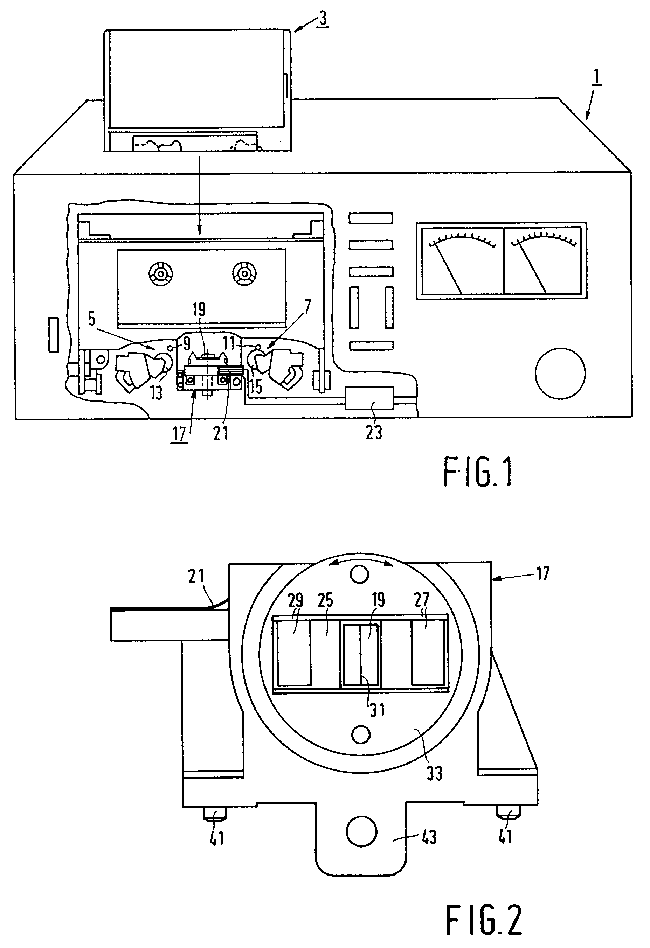

Figure 1 shows a magnetic-tape apparatus 1 in accordance with the invention. This magnetic-tape apparatus 1 is adapted to cooperate with a Digital Compact Cassette 3 (DCC) provided with magnetic tape. For this purpose the magnetic-tape apparatus 1 has tape-transport means 5, 7 for the transport of magnetic tape in a longitudinal direction. These tape-transport means include capstans 9, 11 and pressure rollers 13, 15 which cooperate with one another. For reading and writing information from/on magnetic tape the magnetic-tape apparatus 1 comprises a magnetic-head unit 17. The magnetic-head unit 17 comprises a magnetic head 19 which is rotatable through 180° between two extreme positions. This magnetic-head unit further comprises a elongate foil 21 provided with electrical conductor tracks for the signal transmission between the rotatable magnetic head 19 and a component 23 situated in the magnetic-tape apparatus 1. This component 23 includes a amplifier for amplifying signals from and to the magnetic head 19.

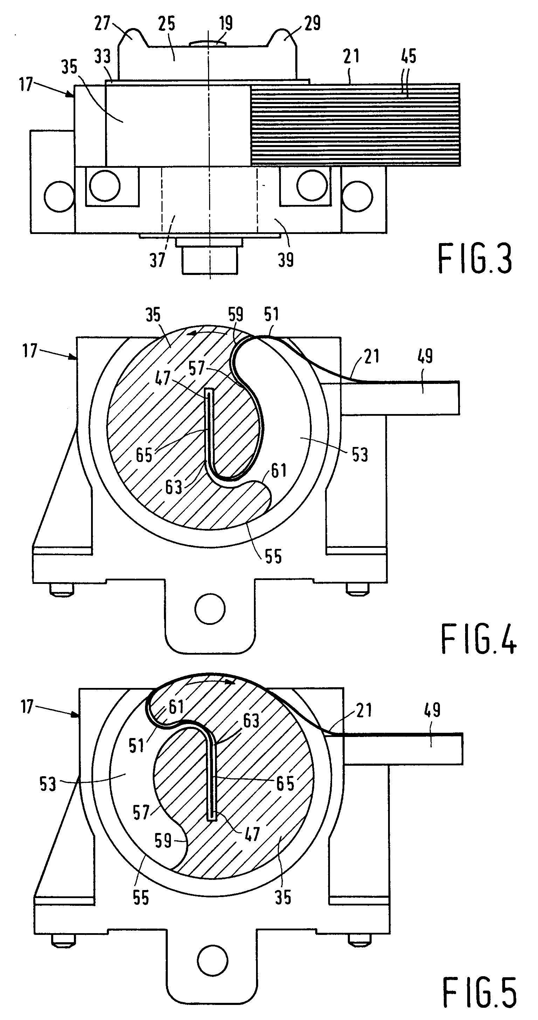

Figures 2 and 3 show the magnetic-head unit 17 in a front view and a plan view, respectively. The magnetic head 19 is situated in a housing 25 having tape guides 27, 29, which guide the magnetic tape in a correct position relative to the magnetic head 19. In a central area 31 the magnetic head 19 has, for example, nine write gaps and nine read gaps for, respectively, writing and reading information in digital form. The housing 25 with the magnetic head 19 is secured to a flange 35, said flange 33 being fixed to a spindle 35 in order to secure the magnetic head 19 to the spindle 35. The spindle 35 has a portion 37 of smaller diameter with which it is journalled in a bearing house 39 of the magnetic-head unit 17. The magnetic-head unit 17 has fixing means 41, 43 for securing the magnetic-head unit in the magnetic-tape apparatus. The foil 21, to which the magnetic head 19 is connected, carries electrical conductor tracks 45 for connection of the magnetic head 19 to the component 23 in the magnetic-tape apparatus.

Figures 4 and 5 are sectional views of the magnetic-head unit 17, showing the magnetic head respectively in a first extreme position and in a second extreme position, rotated through 180° relative to this first extreme position. The foil 21 is wrapped partly around the spindle 35 and has a first end 47 connected to the magnetic head and has a second end 49 by which it can be connected to the component in the magnetic-tape apparatus. A part of the foil 21 between the two ends 47, 49 forms a loop 51, which is situated partly in a recess 53 formed in the spindle 35. This recess 53 extends over a part of the circumference 55 of the spindle 35. The recess is bounded by a bottom 57, which is substantially concentric with the circumference 55 of the spindle 35 and in the tangential direction it is bounded by two walls 59, 61 having a arcuate shape viewed in a radial direction of the spindle 35, the wall 59 being concave and the wall 61 being convex. In the extreme positions of the magnetic head, see Figures 4 and 5, the loop 51 lies against one of the arcuate walls 59 or 61. The first end 47 of the foil 21 engages in a slot 63 formed in the spindle 35 and extending through the central axis 65 of the spindle 35.

Although the invention has been described herein with reference to the drawings this does not imply that the invention is limited to the embodiment shown in the drawings. The invention likewise relates to all embodiments which deviate from those shown in the drawings but fall within the scope defined by the Claims.

## Claims

1. A magnetic-tape apparatus including a magnetic-head unit comprising a magnetic head rotatable between two positions, and a elongate foil wrapped partly around a spindle and provided with electrical conductor tracks for the signal transmission between the magnetic head and a component of the magnetic-tape apparatus, which foil has a first end connected to the magnetic head and a second end to the component, characterized in that a part of the foil between the two ends forms a loop situated at least for the greater part in a recess formed in the spindle, which recess extends over a part of the circumference of the spindle.

2. A magnetic-tape apparatus as claimed in Claim 1, characterized in that in the tangential direction the recess is bounded by two walls having such arcuate shapes viewed in a radial direction of the spindle that the loop lies against one of the arcuate walls in the extreme positions of the magnetic head.

3. A magnetic-tape apparatus as claimed in Claim 1 or 2, characterized in that the first end of the foil engages a slot formed in the spindle and extending through the central axis of the spindle.

4. A magnetic-head unit suitable for use in a magnetic-tape apparatus as claimed in any one of the preceding Claims and comprising a magnetic head secured to a spindle and rotatable between two positions, characterized in that the spindle is formed with a recess extending over a part of the circumference of the spindle to accommodate a foil with conductor tracks.

5. A magnetic-head unit as claimed in Claim 4, the foil being present and having one end connected to the magnetic head, characterized in that a part of the foil forms a loop situated in the recess formed in the spindle.
